## Europäisches Patentamt
## European Patent Office
## Office européen des brevets

(19)

(11) Numéro de publication: **0 134 871**
**A1**

(12)
# DEMANDE DE BREVET EUROPEEN

(21) Numéro de dépôt: **83401850.9**

(22) Date de dépôt: **22.09.83**

(51) Int. Cl.⁴: **G 02 B 27/22**

(43) Date de publication de la demande:
**27.03.85  Bulletin 85/13**

(84) Etats contractants désignés:
**AT BE CH DE FR GB IT LI LU NL SE**

(71) Demandeur: **Cuvillier, Roger**
**2bis, Avenue de la 1 Armée**
**F-21000 Dijon(FR)**

(71) Demandeur: **Drouard, Gabriel**
**6, rue Oswaldo Cruz**
**F-75016 Paris(FR)**

(71) Demandeur: **PHOTO 3D S.A.**
**9, rue de Hanovre**
**F-75002 Paris(FR)**

(72) Inventeur: **Cuvillier, Roger**
**2 bis, avenue de la 1 Armée**
**F-21000 Dijon(FR)**

(72) Inventeur: **Drouard, Gabriel**
**6, rue Oswaldo Cruz**
**F-75016 Paris(FR)**

(74) Mandataire: **Martinet & Lapoux**
**62, rue des Mathurins**
**F-75008 Paris(FR)**

(54) **Visionneuse stéréoscopique.**

(57) La visionneuse permet l'examen direct en relief d'un stéréogramme dont les images ($I_G$, $I_D$) sont à une distance (d) plus petite que l'écartement (D) de deux orifices de visée ($15_G$, $15_D$). Par exemple, les deux images sont au format 24 × 18 mm² et sont juxtaposées pour être enchâssées dans un cadre de diapositive. La visionneuse comprend deux miroirs parallèles ($M1_D$, $M2_D$) pour relier optiquement le centre de l'image gauche ($I_G$) au centre de l'orifice de visée droit ($15_D$) à travers un oculaire ($L_D$), et deux autres miroirs parallèles ($M1_G$, $M2_G$) pour relier optiquement le centre de l'image droite ($I_D$) au centre de l'orifice de visée gauche ($15_G$) à travers un autre oculaire ($L_G$).

FIG.1

EP 0 134 871 A1

## VISIONNEUSE STEREOSCOPIQUE

La présente invention concerne une visionneuse stéréoscopique comprenant une paroi avant munie d'orifices de visée droit et gauche, et un réceptacle ajouré arrière parallèle à la paroi avant pour recevoir un stéréogramme composé d'images monoscopiques gauche et droite, les orifices de visée d'une part et les images d'autre part étant disposés symétriquement par rapport à un plan XX-YY.

Les visionneuses actuelles telles que définies ci-dessus sont propres à observer un stéréogramme pris avec un appareil de prise de vues stéréoscopique doté de deux objectifs. Les deux objectifs sont écartés d'une distance égale à l'écartement entre les yeux, de préférence égale à 64 mm. Le support sensible de l'appareil de prise de vues est actuellement une pellicule standard 135 permettant l'enregistrement de deux images monoscopiques droite et gauche du stéréogramme au petit format 24 x 36 mm$^2$. La distance entre les centres des deux images est égale à celle de 64 mm entre les objectifs de l'appareil de prise de vues.

Pour l'observation des deux images du stéréogramme, la distance entre les deux oculaires de la visionneuse est également égale à 64 mm. Le stéréogramme observé à la visonneuse n'est pas en fait tout à fait identique à l'épreuve négative sur la pellicule de l'appareil de prise de vues. En effet, sachant que chaque objectif renverse l'image de la scène photographiée de droite à gauche et de haut en bas, et que l'oculaire ne redresse pas l'image obtenue, il est nécessaire de retourner chaque image individuellement, ou plus simplement d'intervertir les images droite et gauche pour passer de l'épreuve négative à l'épreuve positive. Afin d'éviter un tel montage manuel par le photographe, une visionneuse spéciale est employée pour l'examen en relief du couple stéréoscopique formé par une diapositive droite et une diapositive gauche, sans nécessiter un découpage de la pellicule. Le redressement de chaque image droite ou gauche est obtenu par un prisme "en toit" placé entre l'oculaire respectif et l'image à examiner.

Récemment, un constructeur a proposé un appareil de prise de vues stéréoscopique, dit appareil NIMSLO, équipé de quatre objectifs distants entre eux de 18 mm. L'appareil NIMSLO enregistre quatre images monoscopiques juxtaposées ayant chacune un hauteur de 24 mm et une longueur de 18 mm. Chaque couple stéréoscopique est composé de l'une des deux images droites et de l'une des deux images gauches. Les deux images juxtaposées du couple occupe une surface de 24 x 36 mm² et peuvent être montées dans un cadre standard de diapositive de 50 x 50 mm².

Le but de la présente invention est de fournir une visionneuse stéréoscopique permettant l'examen direct en relief d'un stéréogramme dont les centres des images sont à une distance plus petite que l'écartement des yeux. L'examen direct du stéréogramme signifie que le redressement des images est obtenu par la visionneuse elle-même.

A cette fin, une visionneuse stéréoscopique telle que définie dans l'entrée en matière est caractérisée en ce que la distance entre les centres des orifices de visée est plus grande que la distance entre les centres des images, et en ce que la visionneuse comprend un premier moyen réflecteur pour relier optiquement le centre de l'image gauche au centre de l'orifice de visée droit et un second moyen réflecteur pour relier optiquement le centre de l'image droite au centre de l'orifice de visée gauche.

Selon une autre caractéristique de la visionneuse selon l'invention, chacun des moyens réflecteurs comprend deux miroirs ayant des faces réfléchissantes parallèles inclinées à 45° par rapport au plan de symétrie et chacune centrée en vis-à-vis du centre de l'image respective et du centre de l'orifice de visée respectif. La double réflexion opérée sur les deux miroirs d'un moyen réflecteur permet de translater latéralement l'axe de visée de l'oeil respectif vers le centre de l'image respective de l'autre côté du plan de symétrie. Ainsi, l'oeil droit est relié optiquement à l'image gauche et l'oeil gauche est relié optiquement à l'image droite.

Des oculaires droit et gauche pourraient être enchâssés dans les orifices de visée placés près des yeux de l'observateur, comme dans une visionneuse classique. Cependant, cette disposition a pour inconvénient une distance focale d'oculaire trop grande pour le format d'image examinée. En effet, cette distance focale grande est imposée par la longueur des trajets optiques qui relient respectivement les images gauche et droite aux orifices de visée droit et gauche et qui sont allongés par la double réflexion sur les miroirs.

Pour éviter cet inconvénient, c'est-à-dire réduire la distance focale des oculaires et augmenter l'angle de champ des images observées, l'oculaire droit est disposé entre les deux miroirs du premier moyen réflecteur, et l'oculaire gauche est disposé entre les deux miroirs du second moyen réflecteur. Une telle disposition permet en outre de choisir une distance focale des oculaires sensiblement égale à celle des objectifs de l'appareil de prise de vues afin d'améliorer la qualité de l'observation.

D'autres caractéristiques et avantages de l'invention apparaîtront plus clairement à la lecture de la description suivante d'une réalisation préférée de la visionneuse selon l'invention en référence aux dessins annexés correspondants, dans lesquels :

- la Fig. 1 est une vue de dessus en coupe de la visionneuse ;

- la Fig. 2 est une vue de face de la paroi avant à orifices de visée de la visionneuse ;

- la Fig. 3 est une vue arrière de la paroi arrière à réceptacle de diapositive de la visionneuse ; et

- la Fig. 4 est une vue axiale d'un oculaire à deux lentilles selon l'invention.

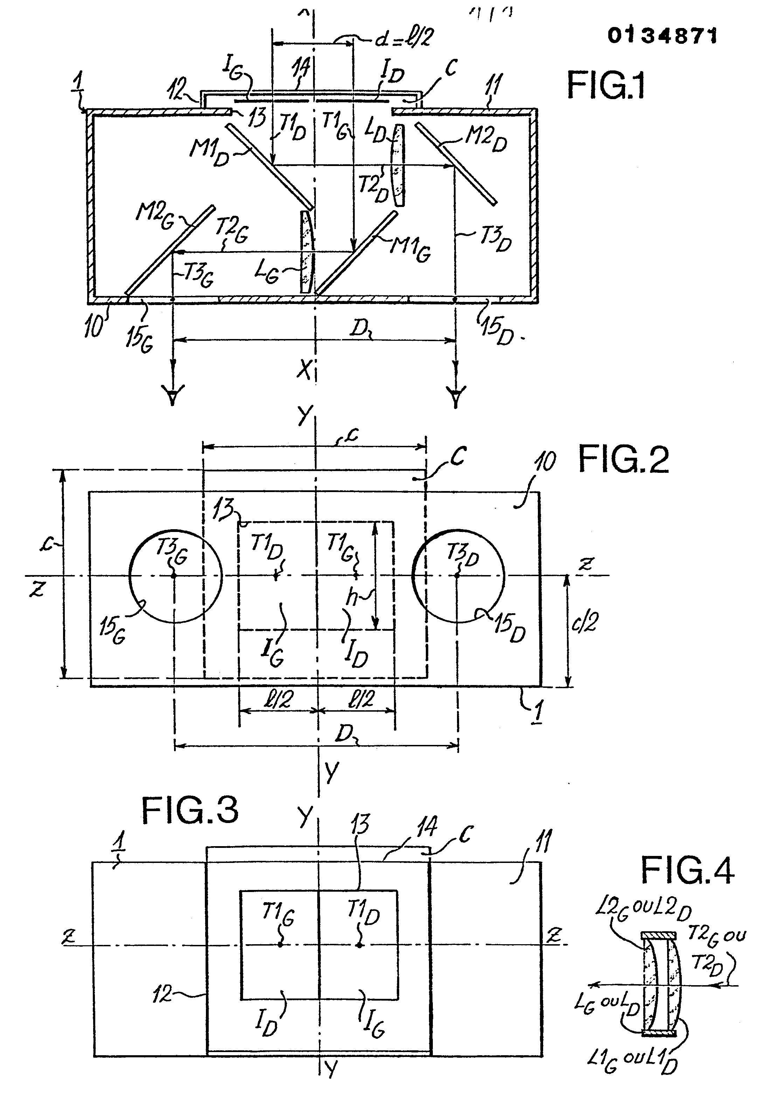

La visionneuse stéréoscopique est sous la forme d'une boîte parallélépipédique 1 à parois opaques, comme montré aux Figs. 1 à 3. Les dimensions de la grande face avant 10 et de la face arrière 11 sont choisies en fonction de l'écartement des yeux et des dimensions d'un cadre de diapositive standard C ayant une section carrée $c \times c = 50 \times 50$ mm$^2$. Au centre du cadre C sont enchâssés deux images monoscopiques gauche et droite, $I_G$ et $I_D$, d'un couple stéréoscopique dit également stéréogramme à observer. Chaque image $I_G$, $I_D$ a une longueur $\ell/2$ de 18 mm et une hauteur h de 24 mm. Le stéréogramme formé par la juxtaposition des images $I_G$ et $I_D$ occupe ainsi la surface d'une diapositive au format standard $h \times \ell = 24 \times 36$ mm$^2$.

La hauteur de la boîte 1 est de l'ordre de (3c + h) /4 afin que le cadre de diapositive C puisse être introduit dans une glissière verticale borgne 12 formant réceptacle de diapositive à l'arrière de la visionneuse et ait son bord horizontal supérieur sensiblement saillant au-dessus de la visionneuse en vue d'une préhension du cadre C, comme montré aux Figs. 2 et 3. La glissière 12 a une épaisseur et une longueur sensiblement égales à celles du cadre C. La glissière 12 est symétrique par rapport au plan vertical transversal de symétrie XX-YY de la boîte 1. Le cadre C dans la glissière 12 présente ainsi les images $I_G$ et $I_D$ accolées de part et d'autre du plan XX-YY. Le petit axe horizontal ZZ des images $I_G$ et $I_D$ est distant de c/2 du fond de la glissière et de la boîte. Dans la paroi avant de la glissière 12 confondue avec la paroi arrière 11 de la boîte 1 est ménagée une fenêtre rectangulaire 13 centrée sur les axes YY et ZZ. La fenêtre 13 a les mêmes dimensions h et $\ell$ que le stéréogramme $I_G$ - $I_D$. Le stéréogramme est éclairé à l'arrière par la lumière naturelle ou par une lampe électrique alimentée par pile, à travers un verre dépoli 14 formant la paroi arrière de la glissière et assurant une répartition équilibrée de la lumière sur la surface du stéréogramme.

Dans la face avant 10 de la boîte 1 sont pratiquées deux orifices de visée gauche et droit $15_G$ et $15_D$. Les orifices $15_G$ et $15_D$ sont par exemple circulaires et contiennent de préférence chacun un verre transparent. Les centres des orifices $15_G$ et $15_D$ sont coplanaires au plan horizontal XX-ZZ contenant les centres des images $I_G$ et $I_D$ et sont symétriques par rapport au plan vertical XX-YY. Les centres des orifices $15_G$ et $15_D$ sont écartés d'une distance prédéterminée D égale à l'écartement moyen des yeux, de l'ordre de 60 à 70 mm, et typiquement égale à 64 mm. La distance D est ainsi nettement supérieure à la distance d = 18 mm entre les centres des images $I_G$ et $I_D$ du cadre C dans la glissière 12.

Comme montré particulièrement à la Fig. 1, un premier chemin optique relie le centre de l'image gauche $I_G$ au centre de l'orifice droit $15_D$, et un second chemin optique relie le centre de l'image droite $I_D$ au centre de l'orifice gauche $15_G$. Les longueurs des premier et second chemins optiques sont égales. Dans la boîte 1, le

long de chacun des premier et second chemins optiques sont disposés un moyen réflecteur $M1_D$ - $M2_D$, $M1_G$ - $M2_G$ et un oculaire $L_D$, $L_G$.

Chaque moyen réflecteur $M1_D$ - $M2_D$, $M1_G$ - $M2_G$ est composé d'un premier miroir plan $M1_D$, $M1_G$ et d'un second miroir plan $M2_D$, $M2_G$ entièrement réflecteurs. Les faces réfléchissantes des deux miroirs de chaque chemin optique sont parallèles et inclinées à 45° par rapport aux parois 10 et 11. Les miroirs $M1_D$ et $M2_D$ sont perpendiculaires aux miroirs $M1_G$ et $M2_G$. Les miroirs $M1_D$ et $M2_D$ sont respectivement centrés devant les images $I_G$ et $I_D$ dans la glissière arrière 12 de la boîte 1, tandis que les miroirs $M1_G$ et $M2_G$ sont respectivement centrés derrière les orifices de visée $15_D$ et $15_G$ dans la paroi avant 10 de la boîte 1.

Chacun des premier et second chemins optiques est coplanaire au plan XX-ZZ et est constitué par trois tronçons optiques. Un premier tronçon optique $T1_D$, $T1_G$ relie le centre de l'image respective $I_G$, $I_D$ au centre de la surface réfléchissante du premier miroir $M1_D$, $M1_G$ et est parallèle à l'axe XX. Un second tronçon optique $T2_D$, $T2_G$ est parallèle à l'axe ZZ et relie les centres des surfaces réfléchissantes du premier miroir $M1_D$, $M1_G$ et du second miroir $M2_D$, $M2_G$. Un oculaire respectif $L_D$, $L_G$ est interposé entre les miroirs $M1_D$ et $M2_D$, $M1_G$ et $M2_G$, et a son axe principal confondu avec le second tronçon $T2_D$, $T2_G$. Un troisième tronçon optique $T3_D$, $T3_G$ est parallèle à l'axe XX et relie le centre de la surface réfléchissante du second miroir $M2_D$, $M2_G$ au centre de l'orifice de visée respectif $15_D$, $15_G$.

Ainsi, les miroirs $M1_D$ et $M2_D$ dans le premier chemin optique translatent le centre de l'image monoscopique gauche $I_G$ du stéréogramme vers l'axe de visée droit $T3_D$, et les miroirs $M1_G$ et $M2_G$ dans le second chemin optique translatent le centre de l'image monoscopique droite $I_D$ du stéréogramme vers l'axe de visée gauche $T3_G$. Ces conditions assurent le redressement des images $I_G$ et $I_D$ et l'observation en relief.

Les oculaires $L_D$ et $L_G$ sont placés à une distance relativement proche des images respectives à observer $I_G$ et $I_D$ le long des premier et second chemins optiques respectivement afin que la distance focale des oculaires soit sensiblement égale à celle des objectifs de l'appareil de prises de vue stéréoscopiques et que le plan des images $I_G$ et $I_D$ soit au foyer des oculaires $L_D$ et $L_G$ le long des chemins optiques $Tl_D - T2_D$ et $Tl_G - T2_G$. Ces conditions confèrent une perspective d'observation proche de la scène photographiée, à laquelle s'ajoute la perception du relief liée à la vision binoculaire. En outre, conjointement à cette condition, il convient de disposer les oculaires droit $L_D$ et gauche $L_G$ respectivement en dehors du champ de vision de l'oeil gauche et de l'oeil droit. Selon la réalisation illustrée à la Fig. 1, l'oculaire droit $L_D$ est disposé à droite du tronçon $Tl_G$ puisque les tronçons optiques $T2_D$ et $Tl_G$ sont concourants.

Chaque oculaire $L_D$, $L_G$ peut être constitué par une lentille plan-convexe ayant une puissance appropriée, comme montré à la Fig. 1. Le dioptre convexe de la lentille $L_D$, $L_G$ est orienté vers la surface réfléchissante du premier miroir $Ml_D$, $Ml_G$. Selon une autre variante, chaque oculaire $L_D$, $L_G$ peut être constitué par deux lentilles plan-convexe empilées axialement $Ll_D$ et $L2_D$, $Ll_G$ et $L2_G$, comme montré à la Fig. 4, pour améliorer la qualité de l'observation des images. Chacune des deux lentilles empilées a une puissance deux fois plus faible que celle de l'oculaire formé par l'association des deux lentilles.

REVENDICATIONS

1 - Visionneuse stéréoscopique (1) comprenant une paroi avant (10) munie d'orifices de visée droit et gauche ($15_D$, $15_G$), et un réceptacle ajouré arrière (12), parallèle à la paroi avant (10), pour recevoir un stéréogramme composé d'images monoscopiques gauche et droite ($I_G$, $I_D$), les orifices de visée d'une part et les images d'autre part étant disposés symétriquement par un rapport à un plan (XX-YY), caractérisée en ce que la distance (D) entre les centres des orifices de visée ($15_D$, $15_G$) est plus grande que la distance (d) entre les centres des images ($I_G$, $I_D$), et en ce que la visionneuse comprend un premier moyen réflecteur ($Ml_D$ - $M2_D$) pour relier optiquement le centre de l'image gauche ($I_G$) au centre de l'orifice de visée droit ($15_D$) et un second moyen réflecteur ($Ml_G$ - $M2_G$) pour relier optiquement le centre de l'image droite ($I_D$) au centre de l'orifice de visée gauche ($15_G$).

2 - Visionneuse conforme à la revendication 1, caractérisée en ce que chacun des moyens réflecteurs comprend deux miroirs ($Ml_D$, $M2_D$ ; $Ml_G$, $M2_G$) ayant des faces réfléchissantes parallèles inclinées à 45° par rapport au plan de symétrie (XX-YY) et chacune centrée en vis-à-vis du centre de l'image respective ($I_G$, $I_D$) et du centre de l'orifice de visée respectif ($15_D$, $15_G$).

3 - Visionneuse conforme à la revendication 2 comprenant un oculaire droit ($L_D$) et un oculaire gauche ($L_G$), caractérisée en ce que l'oculaire droit ($L_D$) est disposé entre les deux miroirs ($Ml_D$, $M2_D$) du premier moyen réflecteur, et l'oculaire gauche ($L_G$) est disposé entre les deux miroirs ($Ml_G$, $M2_G$) du second moyen réflecteur.

4 - Visionneuse conforme à la revendication 3, caractérisée en ce que les oculaires droit ($15_D$) et gauche ($15_G$) sont disposés respectivement par rapport aux images gauche ($I_G$) et droite ($I_D$) à une distance optique sensiblement égale à la distance focale des objectifs d'un appareil de prise de vues stéréoscopique ayant enregistré le stéréogramme ($I_G$ - $I_D$).

5 - Visionneuse conforme à la revendication 3 ou 4, caractérisée en ce que chaque oculaire ($L_D$ ; $L_G$) est constitué par une lentille plan-convexe.

6 - Visionneuse conforme à la revendication 3 ou 4, caractérisée en ce que chaque oculaire ($L_D$ ; $L_G$) est constitué par deux lentilles plan-convexe empilées ($L1_D$, $L2_D$ ; $L1_G$, $L2_G$).

7 - Visionneuse conforme à l'une quelconque des revendications 1 à 6, caractérisée en ce que les images ($I_G$, $I_D$) sont juxtaposées.

8 - Visionneuse conforme à l'une quelconque des revendications 1 à 7, caractérisée en ce que la distance (d) entre les centres des images ($I_G$, $I_D$) est égale à 18 mm ($\ell/2$).

9 - Visionneuse conforme à l'une quelconque des revendications 1 à 8, caractérisée en ce que le réceptacle (12) est propre à recevoir un seul cadre standard de diapositive (C) contenant le stéréogramme ($I_G$ - $I_D$).

0134871

FIG.1

FIG.2

FIG.3

FIG.4

## DOCUMENTS CONSIDERES COMME PERTINENTS

| Categorie | Citation du document avec indication. en cas de besoin. des parties pertinentes | Revendication concernee | CLASSEMENT DE LA DEMANDE (Int Cl.³) |
|---|---|---|---|
| Y | FR-A-2 063 641 (P. CUVIER)<br>* Revendications *<br><br>--- | 1-3 | G 02 B 27/22 |
| Y | FR-A-1 028 749 (G. LAVRILLIER)<br>* Page 1, colonne de droite, ligne 38 - page 2, colonne de droite, ligne 17; page 3, colonne de gauche, ligne 17 - page 3, colonne de droite, ligne 11; figures 1-4,6 * | 1-3 | |
| A | | 5,6,9 | |
| | --- | | |
| A | FR-A- 953 809 (KODAK-PATHE)<br><br>* Page 1, lignes 1-16; page 1, lignes 27-30 * | 1,4,7-9 | |
| | | | **DOMAINES TECHNIQUES RECHERCHES (Int Cl.³)** |
| | --- | | |
| A | DE-B-1 113 099 (M. ULLMANN)<br><br>--- | | G 02 B 27/00 |
| A | DE-C- 958 876 (H. WARSTAT)<br><br>----- | | |

Le present rapport de recherche a ete etabli pour toutes les revendications

| Lieu de la recherche<br>LA HAYE | Date d'achevement de la recherche<br>09-03-1984 | Examinateur<br>POFINEAU G.J.P. |
|---|---|---|